# EUROPEAN PATENT APPLICATION

(11) **EP 1 036 623 A2**
(43) Date of publication of application: **20.09.2000**
(21) Application number: 99110000.9
(22) Date of filing: 21.05.1999
(51) Int. Cl.: B23D 45/14, B23D 45/02

(54) **Mitre sawing machine**

(30) Priority: 11.03.1999 IT MI990491
(71) Applicant: I.M.C. S.r.l., 37040 S.Stefano di Zimella (VR) (IT)
(72) Inventor: Vicentini, Marco, 37047 S.Bonifacio (VR) (IT)
(74) Representative: Robba, Pierpaolo

(57) **Abstract**

A single-blade sawing machine for cutting metal or plastic sections (8) comprises a central body (3) mounted to a support (1); a cutting assembly equipped with a single blade (9) and a motor (15), with the cutting plane of the assembly that can be inclined to a first axis perpendicular to the longitudinal axis of said section (8).

The machine provides swivel means (12, 13) located between said central body (3) and said support (1), for inclining said cutting assembly to a second axis perpendicular to both the longitudinal axis of the section and said first axis whereby said machine accomplishes compound cuts by using a single blade.

## Description

The present invention is concerned with a sawing machine for cutting or sawing elongated members such as metal sections or extruded pieces such as strips, beams or bars both of metal and plastic material, and particularly of non-ferrous metals such as aluminium, light alloys and steel.

In the present description, the expression "metal or plastic sections" refers to elongated structural components having a constant cross section, made of plastics or of metal.

More particularly the machine of the present invention is of the type known as radial sawing machine and capable of accomplishing the so called compound cuts, i.e. a machine adapted to carry out a cut along two different angles in respect of a single centre of rotation. Such machine is further equipped with a single blade.

There are known single-head sawing machines, equipped with a single blade and adapted to carry out cuts in a plane that can be tilted on one side only with respect to the axis of the section.

Moreover single-head rising-blade sawing or cutting-off machines are used that provide for a blade that rises upwards during the cut (rising blade) and allow for cutting the section on both sides.

However with these latter machines one cannot accomplish a so called compound cut, i.e. a cut in a plane that is tilted or inclined both to the longitudinal direction of the section and to a second axis lying in the horizontal plane.

As an example, cuts of this kind are required in building pyramidal structures formed by steel sections.

At present the known sawing machines performing a compound cut on both sides of a section are equipped with two blades, which increases both the complexity and the cost of such machines.

Such double sawing machines provide for two blades, one of which (the left one or SX) is fixed to the machine support, while the other (right) one is movable along the longitudinal axis of the support.

Additionally, for sawing sections having a small thickness and a large height, the so-called tangential sawing machines are used that however require an extended machine length.

It is the object of the present invention to overcome the above illustrated limitations of the prior machines, and particularly to realized a sawing machine capable of carrying out compound cuts by using a single blade, such machine being further adapted to accomplish radial and compound cuts, and capable to perform cuts in both directions.

These objects are achieved through a machine as claimed in claim 1. Further advantageous characteristics are recited by the dependent claims.

The invention will now be described with reference to the attached drawings relating to a preferred but not limiting embodiment thereof, in which:

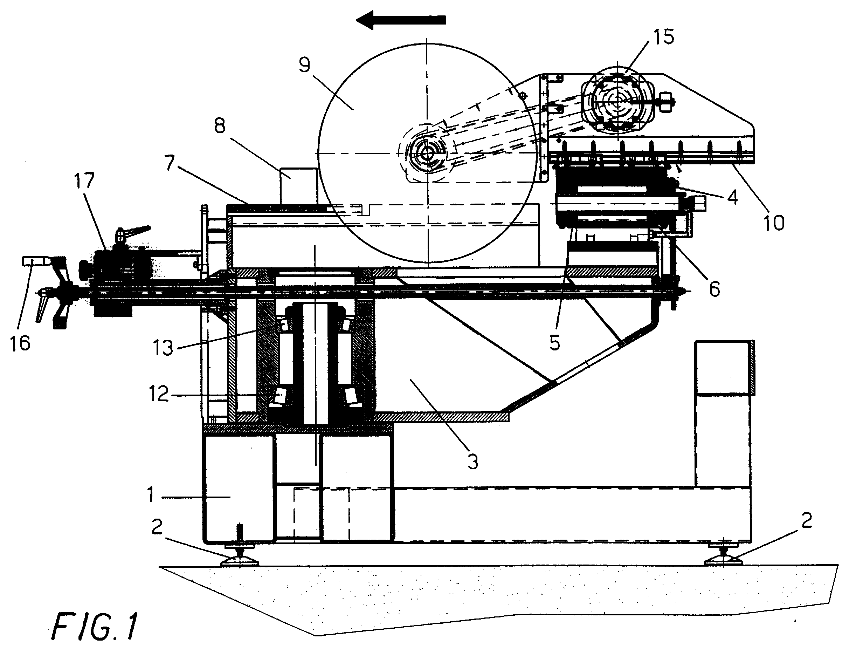

Fig. 1 is a side view of a machine according to the invention;

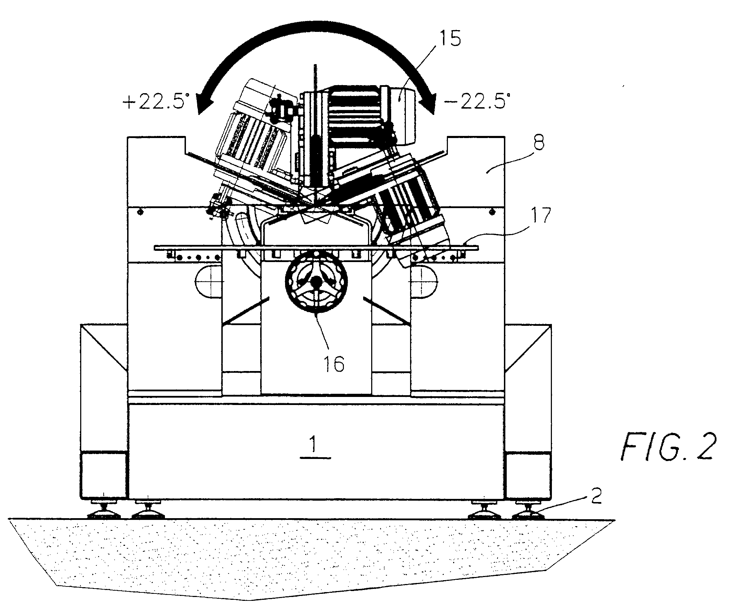

Fig. 2 is a front view of the machine of Fig. 1; and
Fig. 3 is a top view of the machine of Fig. 1.

With reference to the Figures, a sawing machine according to the invention includes a central main body 3 mounted on a support or bed 1 that rests on adjustable feet 2.

A fixed supporting surface 7 on which rests the section 8 to be cut is mounted on body 3.

A cutting assembly formed by a circular blade or cutter 9 driven by a motor 15 arranged on one side of the blade, is further mounted on the body 3 and is movable along a linear guide 10 for linearly advancing the single cutting disk or blade 9.

The cutting plane of the blade 9 can be inclined with respect to an axis perpendicular to the axis of the section 8 to be cut, particularly the horizontal axis.

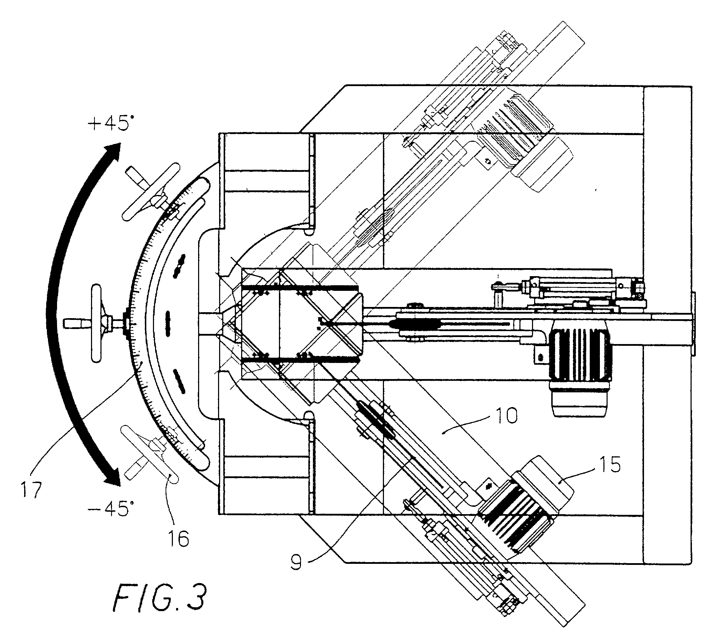

More precisely, the cutting assembly and the guide 10 are mounted to the central body 3 through a holder 4 comprising two bearings 5, 6 (or other equivalent means accomplishing the desired rotation) for rotating the cutting assembly up to 22° in both the directions, as illustrated in Fig. 3 showing both the central position and the two extreme positions of the cutting assembly.

The rotation of the cutting assembly is controlled through a handwheel 16 while a display shows the rotation amount.

According to the invention, the central body 3 is mounted to the support 1 through a pair of conical bearings 12, 13 (or other equivalent swivel device) allowing the rotation of the body 3 around a vertical axis perpendicular to the longitudinal axis of the section, as illustrated in Fig. 3 that shows the central position as well as the two outmost positions of the cutting assembly.

The cutting assembly can be manually rotated in both directions by an angle equal to 45°, and by combining two of such displacements compound cuts can be achieved

Although the arrangement of a machine according to the invention appears to be similar to that of conventional sawing machines, the machine according to the invention achieves a number of advantages in comparison to the traditional machines with the same function.

More particularly a machine according to the invention can assume the configurations and the functions of a normal sawing machine as well as those of a sawing machine for compound cuts.

More particularly a compound cut can be accomplished on both sides of the section using only one blade. In this case the machine operates with a configuration of a sawing machine for compound cuts.

Besides, although having a radial structure, the machine of the invention can perform the cuts of a tangential sawing machine.

Finally, by using a device for manipulating the sections, the machine can be used in lieu of a double sawing machine, both normal and for compound cuts.

Although the invention has been illustrated with reference to a preferred embodiment, nevertheless this is not to be construed as a limitation since the scope of the invention includes several modifications and changes that will result evident to the skilled of the art.

## Claims

1. A sawing machine for cutting lengths of a metal or plastic section (8), comprising:
a central body (3) mounted to a support (1);
a cutting assembly comprising a cutting disk or blade (9) driven by a motor (15) mounted on said body (3); and
means for inclining the cutting plane of said blade (9) to a first axis perpendicular to the longitudinal axis of said section (8);
characterized in that it provides swivel means (12, 13) located between said central body (3) and said support (1), for inclining said cutting assembly to a second axis perpendicular to both the longitudinal axis of the section and said first axis.

2. A machine as claimed in claim 1, characterized in that said inclining means comprises a pair (12, 13) of conic bearings.

3. A machine as claimed in claim 1 or 2, characterized in that said cutting assembly is carried by a guide (10) that allows the linear advancing thereof.

4. A machine as claimed in claim 3, characterized in that said linear guide (10) is mounted to said body (3) through a holder (4) and two bearings (5, 6).

5. A sawing machine as claimed in the preceding claims, characterized in that it provides a single blade (9) .
